Europäisches Patentamt

**European Patent Office**

**Office européen des brevets**

(11) Veröffentlichungsnummer: **0 401 614**

**A1**

## EUROPÄISCHE PATENTANMELDUNG

(21) Anmeldenummer: **90109941.6**

(22) Anmeldetag: **25.05.90**

(51) Int. Cl.⁵: **B05B 1/20, B08B 3/02, F25D 1/02, B01F 5/06**

(30) Priorität: **08.06.89 CH 2148/89**

(43) Veröffentlichungstag der Anmeldung:
**12.12.90 Patentblatt 90/50**

(84) Benannte Vertragsstaaten:
**AT BE DE ES FR GB IT NL SE**

(71) Anmelder: **Steinemann AG**
**Wilerstrasse 111**
**CH-9230 Flawil(CH)**

(72) Erfinder: **Steinemann, Hansjörg**
**Kronbergstrasse 10**
**CH-9230 Flawil(CH)**

(74) Vertreter: **Petschner, Goetz**
**Patentanwaltsbüro G. Petschner**
**Seidengasse 18**
**CH-8001 Zürich(CH)**

(54) **An eine Druck- oder Unterdruckquelle anschliessbare Düse.**

(57) Die an eine Druck- oder Unterdruckquelle anschliessbare Düse umfasst ein Düsenrohr (1) mit einem achsenparallelen Düsenschlitz (2) im Rohrmantel, in welchem Düsenrohr (1) wenigstens angenähert spielfrei und relativ verdrehbar ein Steilrohr (3) einsitzt, das eine Mehrzahl achsenparallelen, partiell und umfänglich verteilten Schlitzen (4) in seinem Rohrmantel aufweist, wobei am Stellrohr (3) und/oder am Düsenrohr (1) Mittel (5) zu deren Relativverdrehung angeordnet sind.

Eine solche Düse lässt sich zum Entfernen von sich niederschlagenden Verunreinigungen an Reihen von bewegten Maschinenteilen oder zum Kühlen von in Reihen angeordneten Maschinenteilen oder zum Ein- oder Durchmischen unterschiedlicher Medien verwenden.

## An eine Druck- oder Unterdruckquelle anschliessbare Düse

Die vorliegende Erfindung betrifft eine Düse, mit einem an eine Druck- oder Unterdruckquelle anschliessbaren Anschlussteil.

In vielen Bereichen der Technik, etwa bei Fabrikationsmaschinen, die in langer Reihe angeordnete bewegte Maschinenteile umfassen, wie etwa Jacquardmaschinen, besteht das Problem der Verschmutzung und/oder Ueberhitzung, was schnell zu Störungen führt.

Um solche Störungen in Grenzen zu halten, wird vielfach versucht, gefährdete Stellen von Hand mittels Saugdüse oder mittels Pressluftschlauch zu säubern resp. zu kühlen. Solche Handhabungen sind natürlich unzureichend und stehen ei ner angestrebten Automation hindernd entgegen.

Aufgabe der vorliegenden Erfindung ist deshalb die Schaffung einer Düse, mit einem an eine Druck- oder Unterdruckquelle anschliessbaren Anschlussteil, welche geeignet ist, an Reihen von bewegten Maschinenteilen automatisch optimale Reinigungs- und/oder Kühlfunktionen zu übernehmen bei grosser Wirtschaftlichkeit in Bezug auf den Energieverbrauch, universeller Anwendbarkeit und Nachrüstbarkeit.

Dies wird erfindungsgemäss erreicht durch ein Düsenrohr mit einem achsenparallelen Düsenschlitz im Rohrmantel, in welchem Düsenrohr wenigstens angenähert spielfrei und relativ verdrehbar ein Regelrohr einsitzt, das eine Mehrzahl achsenparallele, partiell und umfänglich verteilte Regelschlitze in seinem Rohrmantel aufweist, wobei am Regelrohr und/oder am Düsenrohr Mittel zu deren Relativverdrehung angeordnet sind.

Damit wird es möglich, durch entsprechende Dimensionierung der Doppelrohr-Düse diese über die ganze Maschinenbreite im Bereich der Reihe der bewegten Maschinenteile anzuordnen und durch die Relativverdrehung zwischen Düsenrohr und Regelrohr eine gezielte, punktuelle, hinundher wandernde Druckluft- oder Saugluftbeaufschlagung zu erzielen. Hierbei lassen die definierten Düsenaustrittsöffnungen eine genaue Bestimmung der notwendigen Energie zu.

Vorzugsweise wird das Regelrohr umlaufend angetrieben. Zusätzlich kann dann dem Düsenrohr eine alternierende Bewegung vermittelt werden, um in vorgegebenem radialen Winkelbereich wirksam zu sein. Alternativ kann aber auch das Düsenrohr umlaufend angetrieben sein, um neben einer alternierenden Hinundherbewegung der sich öffnenden Düsenmündungen eine Rundumwirkung zu erzielen.

Hierdurch ergibt sich die Möglichkeit, die erfindungsgemässe Düse als Einrichtung zum Ein- oder Durchmischen unterschiedlicher Medien zu verwenden.

Die Medien können flüssig, pulverförmig oder gasförmig sein.

Weitere erfindungsgemässe Verwendungen der Düse bestehen darin, diese als Einrichtung zum Entfernen von sich niederschlagenden Verunreinigungen an Reihen von bewegten Maschinenteilen oder als Einrichtung zum Kühlen von in Reihen angeordneten Maschinenteilen einzusetzen.

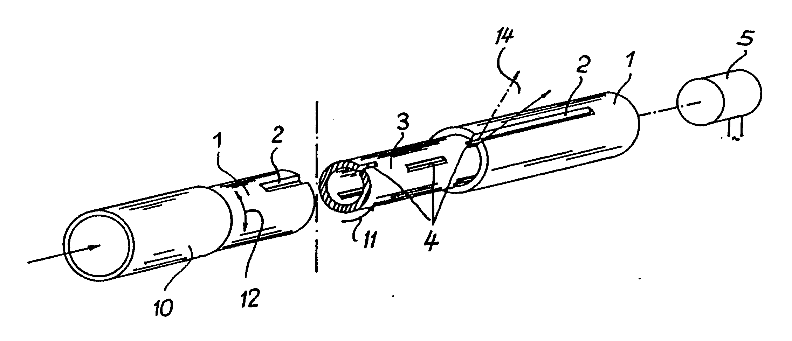

Eine beispielsweise Ausführungsform des Erfindungsgegenstandes ist anhand der Zeichnung, welche in schaubildartiger, teilweise geschnittener und aufgebrochener Darstellung die erfindungsgemässe Düse zeigt, nachfolgend näher erläu tert.

Die gezeigte Düse, welche über einen nicht näher gezeigten Anschlussteil 10 in geeigneter Weise an eine Druck- oder Unterdruckquelle anschliessbar ist, umfasst ein relativ langes Düsenrohr 1 mit einem achsenparallelen Düsenschlitz 2, der sich über angenähert die ganze Länge im Rohrmantel erstreckt.

Dieses Düsenrohr 1 kann beispielsweise längs einer Reihe von Maschinenteilen einer Webmaschine oder dgl. angeordnet sein und dort zur Reinigung und/oder Kühlung dienen oder in ein Medium eingetaucht sein zu dessen Zu- oder Durchmischung. Der entsprechende Verwendungszweck bestimmt die Länge des Düsenrohres 1.

Im Düsenrohr 1 ist ein etwa gleichlanges Regelrohr 3 wenigstens angenähert spielfrei und relativ zum Düsenrohr verdrehbar eingesetzt. Dieses Regelrohr 3 weist eine Mehrzahl achsenparallele, partiell und umfänglich verteilte Regelschlitze 4 in seinem Rohrmantel auf.

Wird nun das Regelrohr 3 umlaufend, beispielsweise in Richtung des Pfeiles 11 angetrieben, erfolgt eine gezielte, punktuelle, hinundher wandernde Druckluft- oder Saugluftbeaufschlagung gemäss Pfeilen 14 in Abhängigkeit der Drehzahl, der Anzahl Regelschlitze und der Grösse deren Oeffnung. Alternativ kann auch das Düsenrohr 1 umlaufen oder alternierend im Sinne des Pfeiles 12 hin und her schwingen, um in einem vorgegebenen radialen Winkelbereich wirksam zu sein.

Für den vorbeschriebenen Antrieb sind am Regelrohr 3 und/oder am Düsenrohr 1 Mittel 5 zu deren Relativverdrehung wirksam, etwa in Form eines Motors mit Getriebe, einer Getriebewelle oder eines Riemen- oder Kettenantriebes oder dgl.

Aus dem Vorbeschriebenen ergibt sich somit eine vielseitig verwendbare Düse von hoher Leistungsfähigkeit bei geringem Energieverbrauch, die zudem von einfacher und funktionssicherer Konzeption ist.

Die vorbeschriebene Düse ist zudem innerhalb des Erfindungsgedankens weiter modifizierbar. Etwa kann das Düsenrohr auch zusätzliche Düsenschlitze oder das Regelrohr anstelle der Regelschlitze Perforationen anderer Art, wie Bohrungen, aufweisen.

## Ansprüche

1. Düse, mit einem an eine Druck- oder Unterdruckquelle anschliessbaren Anschlussteil, gekennzeichnet durch ein Düsenrohr (1) mit einem achsenparallelen Düsenschlitz (2) im Rohrmantel, in welchem Düsenrohr (1) wenigstens angenähert spielfrei und relativ verdrehbar ein Regelrohr (3) einsitzt, das eine Mehrzahl achsenparallele, partiell und umfänglich verteilte Regelschlitze (4) in seinem Rohrmantel aufweist, wobei am Regelrohr (3) und/oder am Düsenrohr (1) Mittel (5) zu deren Relativverdrehung angeordnet sind.

2. Düse nach Anspruch 1, dadurch gekennzeichnet, dass das Regelrohr (3) und/oder das Düsenrohr (1) in Gleichrichtung oder Gegenrichtung umlaufend angetrieben sind.

3. Düse nach Anspruch 1, dadurch gekennzeichnet, dass das Regelrohr (3) umlaufend und das Düsenrohr (1) in vorgegebenem Winkelbereich schwingend angetrieben sind.

4. Verwendung der Düse nach Anspruch 1 als Einrichtung zum Entfernen von sich niederschlagenden Verunreinigungen an Reihen von bewegten Maschinenteilen.

5. Verwendung der Düse nach Anspruch 1 als Einrichtung zum Kühlen von in Reihen angeordneten Maschinenteilen.

6. Verwendung der Düse nach Anspruch 1 als Einrichtung zum Ein- oder Durchmischen unterschiedlicher Medien.

EP 0 401 614 A1

## EINSCHLÄGIGE DOKUMENTE

EP 90109941.6

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | <u>DE - A1 - 2 855 906</u><br>(LECHLER)<br>  * Ansprüche; Fig. 1,2,8,9 *<br>-- | 1,2,4, 5 | B 05 B 1/20<br>B 08 B 3/02<br>F 25 D 1/02<br>B 01 F 5/06 |
| X | <u>DE - A1 - 2 627 957</u><br>(HAMMELMANN)<br>  * Ansprüche; Fig. 1-4 *<br>-- | 1,4 | |
| X | <u>DE - A1 - 3 634 254</u><br>(SCHNEIDER)<br>  * Ansprüche; Fig. 1-1c *<br>---- | 1,6 | |

RECHERCHIERTE SACHGEBIETE (Int Cl⁵)

B 05 B
B 08 B 3/00
F 25 D 1/00
B 01 F 5/00

Der vorliegende Recherchenbericht wurde für alle Patentansprüche erstellt.

| Recherchenort | Abschlußdatum der Recherche | Prüfer |
|---|---|---|
| WIEN | 10-08-1990 | KUTZELNIGG |